# EUROPEAN PATENT SPECIFICATION

(11) **EP 2 471 673 B1**
(45) Date of publication and mention of the grant of the patent: **14.01.2015**
(21) Application number: 10811865.4
(22) Date of filing: 24.08.2010
(51) Int. Cl.: B60C 17/00, B60C 9/00

(54) **RUN FLAT TIRE**
REIFEN MIT NOTLAUFRING
PNEU À ROULEMENT À PLAT

(30) Priority: 24.08.2009 JP 2009193672; 24.08.2010 JP 2010186990
(43) Date of publication of application: 04.07.2012
(73) Proprietor: Bridgestone Corporation, Tokyo 104-8340 (JP)
(72) Inventor: KAWASHIMA Keisuke, Kodaira-shi Tokyo 187-0031 (JP); MORI Hiroyuki, Kodaira-shi Tokyo 187-0031 (JP)
(74) Representative: Oxley, Robin John George
(86) International application number: PCT/JP2010/064303
(87) International publication number: WO 2011/024815

(56) References cited:
- JP-A- 11 227 427
- JP-A- 54 045 007
- JP-A- 2005 199 763
- JP-A- 2009 132 324
- JP-A- 2009 149 282
- JP-A- 2010 058 740
- JP-A- 2010 137 600

## Description

### Technical Field

The present invention relates to a run-flat tire (hereinafter, also simply referred to as "tire"), and more particularly, to a run-flat tire in which a reinforcing cord in a carcass is improved.

### Background Art

As a tire which can travel a certain amount of distance safely without losing the load-supporting ability even when the internal pressure of the tire is decreased due to a blowout or the like, which is a so-called run-flat tire, a variety of run-flat tires of a side reinforcing type such as a tire in which a side reinforcing rubber layer having a crescent cross-sectional shape with a relatively high modulus is arranged on the inner surface of a carcass at a side wall portion of the tire to improve the rigidity of the side wall portion, and which can support a load without extremely increasing the deflection of the side wall portion when the internal pressure is decreased and a tire whose side wall portion is reinforced by a variety of reinforcing members are proposed.

Generally, rayon has conventionally been employed as a reinforcing cord for a carcass ply of such a run-flat tire. While rayon has a great effect of inhibiting deflection during run-flat travelling since rayon is a fiber having a high rigidity, when the temperature of the tire is high, an effect of inhibiting deflection cannot be obtained due to its little thermal shrinkage stress. Since rayon has a high rigidity, the vertical stiffness of the tire using rayon during normal travelling is high, and therefore, rayon also has a drawback that it causes poor riding comfort.

For example, in Patent Document 1, as a technique for improving a run-flat tire, a technique of using, as a reinforcing cord for a carcass, a polyketone fiber cord having a specific thermal shrinkage stress and tensile stiffness is described. By using this technique, deflection of the tire during run-flat travelling can be inhibited without increasing the weight of the tire, and as a result, the run-flat durability of the tire can be considerably improved without deteriorating the riding comfort during normal travelling.

### Related Art Documents

Patent Document
Patent Document 1: Japanese Unexamined Patent Application Publication No. 2006-224952 (Claims and the like). Attention is also drawn to the disclosure of JP11 227,427.

### Summary of the Invention

### Problems to be Solved by the Invention

Although, as described above, conventionally, the compatibility between the riding comfort and the run-flat travel durability of a run-flat tire during normal travelling has been widely studied, along with a growing required performance for a run-flat tire, the establishment of a technique in which a still higher compatibility between them can be attained has been desired.

Accordingly an object of the present invention is to provide a run-flat tire in which a higher compatibility between the riding comfort and the run-flat travel durability during normal travelling can be attained.

### Means for Solving the Problems

In order to solve the above problems, the present inventors intensively studied to discover that by using, as a reinforcing cord of carcass, a hybrid cord having a prescribed high thermal shrinkage stress, deflection of a tire during run-flat travelling can be inhibited while suppressing the vertical stiffness of a tire during normal travelling, thereby completing the present invention.

That is, the present invention relates to a run-flat tire comprising a left-right pair of bead portion, a pair of side wall portions continued from the bead portions individually to the outside in the tire radial direction, a tread portion extending between the pair of side wall portions to form a ground contacting portion, a carcass composed of one or more carcass plies extending toroidally between the pair of bead portions to reinforce these portions, and a side reinforcing rubber layer having a crescent cross-sectional shape arranged on the inside of the carcass at the side wall portion, wherein
the carcass ply cord is a hybrid cord formed by twisting a filament composed of cellulose fibers and a filament composed of nylon, the thermal shrinkage stress (cN/dtex) of the hybrid cord at 177°C after an adhesive treatment is not less than 0.20 cN/dtex, and the thermal shrinkage stress (cN/dtex) of the hybrid cord at 177°C drawn from a tire product is not less than 0.10 cN/dtex.

In the present invention, it is preferable that the tensile stiffness of the hybrid cord at 25°C at 1% strain after an adhesive treatment be not higher than 60 cN/dtex, and the tensile stiffness of the hybrid cord at 25°C at 3% strain after an adhesive treatment be not lower than 30 cN/dtex, and that the tensile stiffness of the hybrid cord at 25°C at 1 % strain drawn from a tire product be not higher than 45 cN/dtex, and the tensile stiffness of the hybrid cord at 25°C at 3% strain drawn from a tire product be not lower than 12 cN/dtex. It is preferable that the ratio of the dtex value of nylon to the total dtex value of the hybrid cord be in the range from 17% to 60%.

In the present invention, it is preferable that the hybrid cord be formed by being treated by one type of adhesive. More suitably, the number of ply twists of two types of organic fibers constituting the hybrid cord is 30 to 60 /10 cm, and the number of cable twists of the hybrid cords is 25 to 60 /10 cm. Further, it is preferable that either one of or both of the side reinforcing rubber layer and the bead filler, which are composed of a rubber composition, contain not more than 50 parts by mass of a filler with respect to 100 parts by mass of a rubber ingredient; the dynamic storage modulus E' at dynamic strain 1% at 25°C be not higher than 10 MPa; and the Σ value of the loss tangent tan δ at 28 to 150°C is not higher than 5.0, as a physical property of a vulcanized rubber.

### Effects of the Invention

By the present invention, by employing the above-mentioned constitution, deflection of a tire during run-flat travelling is inhibited by the generation of thermal shrinkage stress while suppressing the vertical stiffness during normal travelling, whereby it becomes possible to provide a run-flat tire in which a higher compatibility between the riding comfort and the run-flat travel durability during normal travelling is attained.

### Brief Description of Drawings

Fig. 1 is a half sectional view in the width direction of one example of a run-flat tire of the present invention.
Fig. 2 is a graph representing the relation between temperature and tan δ.

### Modes for Carrying out the Invention

Embodiments of the present invention will now be described in detail with reference to the drawings.

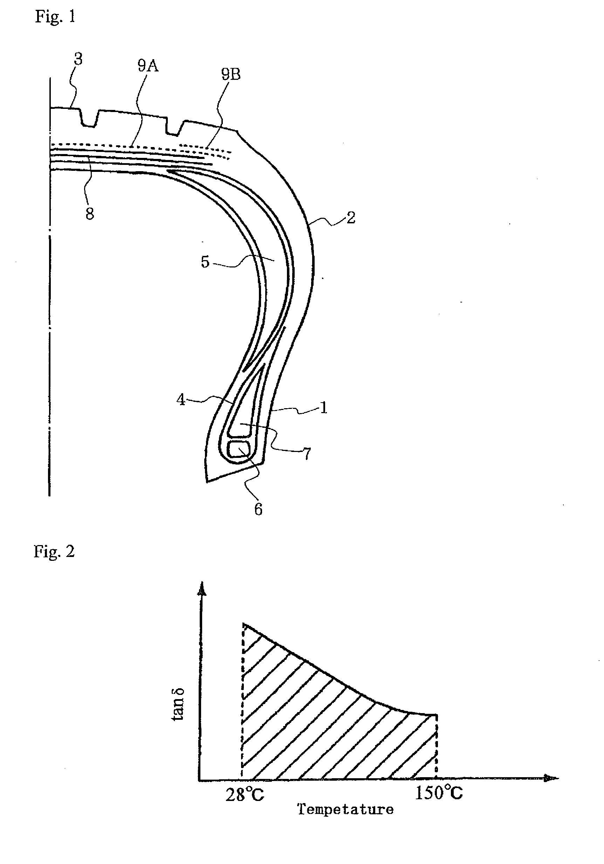

Fig. 1 is a half sectional view in the width direction of one example of a run-flat tire of the present invention. As illustrated in the drawing, the run-flat tire of the present invention has a left-right pair of bead portion 1, a pair of side wall portions 2 continued from the bead portions 1 individually to the outside in the tire radial direction, a tread portion 3 extending between the pair of side wall portions 2 to form a ground contacting portion, a carcass 4 composed of one or more carcass plies extending toroidally between the pair of bead portions 1 to reinforce these portions 1, 2, 3, and a side reinforcing rubber layer 5 having a crescent cross-sectional shape arranged on the inside of the carcass 4 at the side wall portion 2.

In the tire illustrated in the drawing, a bead filler 7 is arranged at the outside in the tire radial direction of a bead core 6 having a ring shape individually embedded in the bead portion 1, and a belt 8 composed of two belt layers is arranged at the outside in the tire radial direction of the crown portion of the carcass 4. Further, at the outside in the tire radial direction of the belt 8, a belt reinforcing layer 9A covering the whole of the belt 8, and a pair of belt reinforcing layers 9B which cover only the both ends of the belt reinforcing layer 9A.

Here, the carcass 4 is constituted by one sheet of carcass ply formed such that a plurality of reinforcing cords arranged in parallel are covered with a coating rubber, and is composed of a body portion extending toroidally between a pair of bead cores 7 embedded individually in the bead portions 1 and a turnup portion which is curled up outside in the tire radial direction around each of the bead cores 7 from inside to outside in the tire width direction. The number of plies and the structure of the carcass 4 in the tire of the present invention is not limited thereto. Usually, the belt layer is composed of a rubber coated layer of cords, preferably steel cords extending with an inclination angle of 10° to 40° with respect to the tire equatorial plane, and the two belt layers are laminated such that cords constituting the belt layer are crossed each other sandwiching the equatorial plane, to thereby constitute a belt 8. In the illustrated example, the belt 8 is composed of two belt layers, and in the pneumatic tire of the present invention, the number of the belt layers constituting the belt 8 is not limited thereto. Further, belt reinforcing layers 9A, 9B are usually composed of a rubber coated layer of cords arranged substantially in parallel to the tire circumference direction. In the present invention, the belt reinforcing layers 9A, 9B are not necessarily provided, and belt reinforcing layers having other structures can also be provided.

In the present invention, as a carcass ply cord constituting the carcass 4, a hybrid cord formed by twisting filaments composed of two kinds of organic fibers, wherein the thermal shrinkage stress (cN/dtex) at 177°C after an adhesive treatment (a dip treatment) is not less than 0.20 cN/dtex is used. This is equivalent to not less than 0.10 cN/dtex in the case of the thermal shrinkage stress (cN/dtex) at 177°C of a carcass ply cord drawn from a tire product. That is, by combining an organic fiber cord not having a high thermal shrinkage stress but having a high rigidity and an organic fiber cord having a low rigidity but having a high thermal shrinkage stress to obtain a hybrid cord having a prescribed high thermal shrinkage stress, a cord having a high thermal shrinkage stress and having a low rigidity at initial stage can be obtained. By using such a hybrid cord as a carcass ply cord, it becomes possible to obtain a run-flat tire in which the riding comfort is favorably retained while suppressing an increase in the vertical stiffness of the tire during normal travelling, as well as, the run-flat travel durability is improved by inhibiting deflection of the tire during run-flat travelling.

When the thermal shrinkage stress of such a hybrid cord at 177°C after the adhesive treatment is lower than 0.20 cN/dtex and the thermal shrinkage stress of a cord drawn from the tire is lower than 0.10 cN/dtex, the run-flat travel durability becomes insufficient. Higher the thermal shrinkage stress, the better, and for example, the thermal shrinkage stress is in the range from 0.25 to 0.40 cN/dtex. This is equivalent to 0.12 to 0.25 cN/dtex in the case of the thermal shrinkage stress (cN/dtex) at 177°C of a cord drawn from the tire. Here, the thermal shrinkage stress of the hybrid cord at 177°C after the adhesive treatment is obtained as a stress generated in a cord at 177°C in which a sample of a hybrid cord having a fixed length of 25 cm before vulcanization on which a general dip treatment is performed is heated at a temperature rising rate of 5°C/min. The thermal shrinkage stress of the cord drawn from a tire at 177°C is obtained as a stress generated in a cord at 177°C in which a cord section sandwiched by bead cores is drawn from a carcass cord and heated at a temperature rising rate of 5°C/min.

In such a hybrid cord, the tensile stiffness at 25°C at 1% strain after an adhesive treatment is preferably not higher than 60 cN/dtex, particularly 35 to 50 cN/dtex, and the tensile stiffness at 25°C at 3% strain after an adhesive treatment is preferably not lower than 30 cN/dtex, particularly 45 to 70cN/dtex. This is equivalent to, in the carcass ply cord drawn from a tire product, not higher than 45 cN/dtex, particularly 18 to 35 cN/dtex in the case of the tensile stiffness of the hybrid cord at 25°C at 1% strain drawn from a tire product, and not lower than 12 cN/dtex, particularly 15 to 30 cN/dtex in the case of the tensile stiffness of the hybrid cord at 25°C at 3% strain drawn from a tire product. Since the vertical stiffness of the tire is desired to be low when the strain is small, it is suitable that the tensile stiffness at 1 % strain of a cord after an adhesive treatment be not higher than 60 cN/dtex and not higher than 45 cN/dtex in the case of a cord drawn from a tire. This is equivalent to, for example, a value not higher than the value of the tensile stiffness of rayon. On the other hand, when the strain is large, in order to obtain an effect of inhibiting deflection, it is suitable that the tensile stiffness at 3% strain of a cord after an adhesive treatment be not lower than 30 cN/dtex and not lower than 12 cN/dtex in the case of a cord drawn from a tire. This is equivalent to, for example, a value not lower than the value of the tensile stiffness of rayon.

In the present invention, for two types of organic fibers used for such a hybrid cord, as a fiber not having a high thermal shrinkage stress and having a high rigidity, a cellulose fiber such as rayon or lyocell is used, and as a fiber having a low rigidity and having a high thermal shrinkage stress, nylon is used.

By using the combination of cellulose fiber and nylon as two types of organic fibers constituting the hybrid cord, RFL adhesive liquid using resorcinol formaldehyde latex (RFL) which is conventionally generally used as an adhesive for manufacturing a dip cord can be employed, thereby ensuring adhesiveness by a treatment by one type of adhesive. Organic fibers which is based on polyester or aramid such as polyethylene terephthalate (PET), polyethylene naphthalate (PEN) and polytrimethylene terephthalate (PTT) have a poor adhesiveness to rubber due to its chemical property. In order to ensure adhesion, a pretreatment by, for example, blocked isocyanate or epoxy resin is required, which increases man-hours during an adhesive application process. Since the fatigability is worse compared to cellulose fiber or nylon fiber when aramid fiber or polyketone fiber is used, in order to ensure the fatigability, a high twist is needed in a twisting process, which increases man-hours for the twisting process, as well as which sometimes makes the diameter thereof too large. As a result, by the combination of other organic fibers than cellulose fiber or nylon, an adhesiveness cannot be ensured without using two types of adhesives. When two types of adhesives are used, man-hours for a dip treatment increase, and when two types of adhesives are mixed, a side reaction can occur. In any way, this is practically not satisfactory.

In the case of using the combination of cellulose fiber and nylon as two types of organic fibers constituting the hybrid cord, it is preferable that the ratio of the dtex value of nylon to the total dtex value of the hybrid cord be in the range from 17% to 60%. When the ratio of the detex value of nylon is below this range, the thermal shrinkage stress of the hybrid cord becomes low, and when the ratio is above this range, the tensile stiffness becomes low, either of which is not preferable.

In the present invention, examples of a method of adjusting the thermal shrinkage stress and the tensile stiffness of a hybrid cord using these organic fibers include a method of controlling a tension or temperature during an adhesive treatment (dip treatment). For example, by performing the dip treatment while applying a high tension, the value of the thermal shrinkage stress of the cord can be increased. By performing the dip treatment at a low temperature, the value of the thermal shrinkage stress of the cord can be increased. That is, although organic fibers have individual specific physical properties range, by controlling the above-mentioned dip treatment conditions, the physical property values can be adjusted in the range to obtain a hybrid cord having desired physical properties.

In the present invention, it is preferable that the number of ply twists of two types of organic fibers constituting the above-mentioned hybrid cord be 30 to 60 /10 cm, and the number of cable twists of the hybrid cords be 25 to 60 /10 cm. By making the number of twists and the number of cable twists of the above-mentioned hybrid cord in these ranges, a desired tensile stiffness can be attained.

In the present invention, it is preferable that either one of or both of the side reinforcing rubber layer 5 and the bead filler 7 contain not more than 50 parts by mass of a filler with respect to 100 parts by mass of a rubber ingredient; the dynamic storage modulus E' at dynamic strain 1 % at 25°C as a physical property of a vulcanized rubber be not higher than 10 MPa; and the tire be composed of a rubber composition in which the Σ value of the loss tangent tan δ at 28 to 150°C is not higher than 5.0. By using such a rubber composition for either one of or both of the side reinforcing rubber layer 5 and the bead filler 7, the heat generation of the tire can be inhibited and decrease in the tensile stiffness of the rubber can be inhibited, thereby improving the run-flat durability. Since an effect of inhibiting heat generation in the hybrid cord can be obtained, the fatigue of the cord generated due to the difference in physical properties between hybrid cords can be inhibited.

Examples of rubber ingredients of the rubber composition used in the present invention include natural rubber (NR) and diene based synthetic rubbers. Examples of the diene based synthetic rubbers include styrene-butadiene copolymer (SBR), polybutadiene (BR), polyisoprene (IR), styrene-isoprene copolymer (SIR), isobutylene-isoprene rubber (IIR), halogenated isobutylene-isoprene rubber, ethylene-propylene-diene terpolymer (EPDM) and mixture thereof. More preferable is a diene based modified rubber in which a part of or whole diene based synthetic rubber has a branch structure by using a polyfunctional modifying agent such as a tin tetrachloride.

In the rubber composition of the present invention, as rubber ingredients, those containing an amine-modified conjugated diene based polymer in which a conjugated diene based polymer is amine-modified can be preferably used. Specific examples thereof suitably include those containing such an amine-modified conjugated diene based polymer in the rubber ingredients in a percentage of not less than 30% by mass, particularly not less than 50% by mass. By containing an amine-modified conjugated diene based polymer as the rubber ingredients by not less than 30 parts by mass, the obtained rubber composition has low heat generating properties, and when the rubber composition is applied to a tire, the run-flat travel durability of the tire can favorably be improved.

As the above-mentioned amine-modified conjugated diene based polymer, those in which a protic amino group which is an amine-based functional group and/or an amino group which is protected by detachable group are introduced into the molecule as a functional group for modification are preferable, and further, those in which a functional group containing a silicon atom is introduced are preferable. Examples of the functional group containing a silicon atom include a silane group in which a hydrocarbyloxy group and/or a hydroxy group are bonded to a silicon atom. Such a functional group for modification may exist anywhere at the end of polymerization initiation, at a side chain and at the polymerization active end of a conjugated diene based polymer. In the present invention, such a functional group for modification has an amino group which is protected by a protic amino group and/or a detachable group preferably at the polymerization end, more preferably at the same polymerization active end, and a silicon atom to which a hydrocarbyloxy group and/or a hydroxy group are/is bonded, particularly preferably a silicon atom to which one or two hydrocarbyloxy groups and/or hydroxy groups are bonded.

Examples of the above-mentioned protic amino group include at least one selected from the group consisting of a primary amino group, a secondary amino group and salts thereof. Examples of the amino group protected by a detachable group include an N,N-bis(trihydrocarbylsilyl)amino group and an N-(trihydrocarbylsilyl)imino group. From the viewpoint of favorable dispersion of a filler, tirialkyl silyl group in which the hydrocarbyl group is a C1-10 alkyl group is preferable, and a trimethyl silyl group is more preferable. Examples of a primary amino group protected by a detachable group (also referred to as a protected primary amino group) include N,N-bis(trimethyl silyl)amino group, and examples of a secondary amino group protected by a detachable group include N-(trimethyl silyl)imino group. As the N-(trimethyl silyl)imino group-containing group, a non-cyclic imine residue and a cyclic imine residue can be used.

As a primary amine-modified conjugated diene based polymer which is modified by a primary amino group among the above-mentioned amine-modified conjugated diene based polymers, a primary amine-modified conjugated diene based polymer which is modified by a protected primary amino group obtained by allowing a protected primary amine compound to react with the active end of a conjugated diene based polymer is suitable.

A conjugated diene based polymer used for modification may be a homopolymer of a conjugated diene compound and may be a copolymer of a conjugated diene compound and an aromatic vinyl compound. Examples of the conjugated diene compound include 1,3-butadiene, isoprene, 1,3-pentadiene, 2,3-dimethyl-1,3-butadiene, 2-phenyl-1,3-butadiene, 1,3-hexadiene. These may be used alone or two or more of these may be used in combination. Among these, 1,3-butadiene is particularly preferable. Examples of the aromatic vinyl compound used for copolymerization with the conjugated diene compound include styrene, α- methyl styrene, 1-vinyl naphthalene, 3-vinyl toluene, ethyl vinyl benzene, divinyl benzene, 4-cyclohexyl styrene, 2,4,6-tri methyl styrene. These may be used alone or two or more of these may be used in combination. Among these, styrene is particularly preferable. As the conjugated diene based polymer, polybutadiene or styrene-butadiene copolymer is preferable, and polybutadiene is particularly preferable.

In order to react a protected primary amine at the active end of the conjugated diene based polymer to be modified, as such a conjugated diene based polymer, those in which at least 10% of polymer chain has living character or quasi-living character are preferable. Examples of a polymerization reaction having such a living character include a reaction of anionic polymerization of a conjugated diene compound alone or a conjugated diene compound and an aromatic vinyl compound using an organic alkali metal compound as an initiator in an organic solvent, and a reaction of coordinated anionic polymerization of a conjugated diene compound alone or a conjugated diene compound and an aromatic vinyl compound using a catalyst containing a lanthanide series rare earth element compound in an organic solvent. Since the former reaction can provide those containing high content of vinyl bonds at the conjugated diene portion compared with the latter reaction, the former reaction is preferable. By making the content of vinyl bonds high, the thermal resistance can be improved.

As the organic alkali metal compound used as the above-mentioned anionic polymerization initiator, organolithium compounds are preferred. The organolithium compounds are not particularly limited and hydrocarbyl lithium and lithium amide compound are preferably used. When hydrocarbyl lithium is used, a conjugated diene based polymer which has a hydrocarbyl group at the polymerization initiation end and in which the other end is a polymerization active portion is obtained. When a lithium amide compound is used, a conjugated diene based polymer which has a nitrogen-containing group at the polymerization initiation end and in which the other end is a polymerization active portion is obtained.

As the above-mentioned hydrocarbyl lithium, those having a C2-20 hydrocarbyl group is preferred, and examples thereof include ethyl lithium, *n*-propyl lithium, isopropyl lithium, *n*-butyl lithium, *sec*-butyl lithium, *tert*-octyl lithium, *n*-decyl lithium, phenyl lithium, 2-naphthyl lithium, 2-butylphenyl lithium, 4-phenylbutyl lithium, cyclohexyl lithium, cyclopentyl lithium and reaction product of diisopropenyl benzene and butyl lithium. Among these, *n*-butyl lithium is particularly suitable.

On the other hand, examples of the lithium amide compounds include lithium hexamethylene imide, lithium pyrrolidide, lithium piperidide, lithium heptamethylene imide, lithium dodecamethylene imide, lithium dimethyl amide, lithium diethyl amide, lithium dibutyl amide, lithium dipropyl amide, lithium diheptyl amide, lithium dihexyl amide, lithium dioctyl amide, lithium di-2-ethylhexyl amide, lithium didecyl amide, lithium-N-methyl piperazide, lithium ethyl propyl amide, lithium ethyl butyl amide, lithium ethyl benzyl amide and lithium methyl phenethyl amide. Among these, from the viewpoint of an effect of interaction with carbon black and the polymerization initiation ability, cyclic lithium amides such as lithium hexamethylene imide, lithium pyrrolidide, lithium piperidide, lithium heptamethylene imide, lithium dodecamethylene imide are preferred, and lithium hexamethylene imide and lithium pyrrolidide are particularly preferred. These lithium amide compounds may be used for polymerization generally as those prepared in advance from secondary amine and a lithium compound, and they can be prepared in the polymerization system (in-situ). The amount of the polymerization initiator used is preferably selected in the range of 0.2 to 20 millimoles based on 100 g of a monomer.

A method of manufacturing a conjugated diene based polymer by anionic polymerization using the above-mentioned organolithium compounds as a polymerization initiator is not particularly limited, and a conventionally known method can be used. Specifically, by the anionic polymerization of a conjugated diene compound or a conjugated diene compound and an aromatic vinyl compound in an organic solvent which is inactive to a reaction, for example hydrocarbon solvents such as aliphatic, alicyclic, aromatic hydrocarbon compound, using a lithium compound as a polymerization initiator, and under the presence of randomizer which is optionally used, a conjugated diene based polymer having a desired active end is obtained. In the case of using an organolithium compound as a polymerization initiator, not only a conjugated diene based polymer having an active end but also a copolymer of a conjugated diene compound having an active end and an aromatic vinyl compound can be efficiently obtained compared with the case of using the above-mentioned catalyst containing lanthanide series rare earth element compound.

As the above-mentioned hydrocarbon solvents, C3-8 hydrocarbon is preferred, and examples thereof include propane, n-butane, isobutane, *n*-pentane, isopentane, *n-*hexane, cyclohexane, propene, 1-butene, isobutene, trans-2-butene, cis-2-butene, 1-pentene, 2-pentene, 1-hexene, 2-hexene, benzene, toluene, xylene and ethylbenzene. These may be used alone or two or more of these may be used in combination. The concentration of monomer in the solvent is preferably 5 to 50% by mass, and more preferably 10 to 30% by mass. When copolymerization is performed by using a conjugated diene compound and an aromatic vinyl compound, the content of the aromatic vinyl compound in the batch monomer mixture is preferably in a range not more than 55% by mass.

The randomizer optionally used herein means a compound having effects such as a control of microstructure of a conjugated diene based polymer, for example, increase in the 1,2 bonds in butadiene portion in a butadiene-styrene copolymer and 3,4 bonds in isoprene, and a control of the composition distribution of the monomer units in a conjugated diene compound-aromatic vinyl compound copolymer, for example, a randomization of butadiene units and styrene units in a butadiene-styrene copolymer. This randomizer is not particularly limited, and any of known compounds conventionally generally used as a randomizer can be appropriately selected and used. Specific examples thereof include ethers and tertiary amines such as dimethoxybenzene, tetrahydrofuran, dimethoxyethane, diethylene glycol dibutylether, diethylene glycol dimethyl ether, oxolanyl propane oligomers (in particular, those containing 2,2-bis(2-tetrahydrofuryl)-propane or the like), triethylamine, pyridine, N-methyl morpholine, N,N,N',N'-tetra methyl ethylene diamine, 1,2-dipiperidino ethane. Potassium salts such as potassium *tert*-amylate, potassium *tert*-butoxide and sodium salts such as sodium *tert*-amylate can also be used. These randomizers may be used alone or two or more of these may be used in combination. The amount thereof used is preferably selected in a range of 0.01 to 1000 mole equivalent per 1 mole of lithium compound.

The temperature of this polymerization reaction is selected in a range of preferably 0 to 150°C, and more preferably 20 to 130°C. The polymerization reaction can be performed under the generated pressure, and usually, it is desired that the polymerization reaction is operated under a sufficient pressure to maintain the monomer substantially in a liquid phase. That is, optionally, a higher pressure can be used although it depends on the individual materials to be polymerized or polymerization medium and polymerization temperature to be used. Such a pressure can be obtained by an appropriate method such as pressurizing a reactor with an inactive gas with respect to the polymerization reaction.

In the present invention, by allowing a protected primary amine as a modifying agent to react with the active end of the conjugated diene based polymer having the active end obtained as above, a primary amine-modified conjugated diene based polymer can be manufactured. As such a protected primary amine compound, an alkoxysilane compound having a protected primary amino group is suitable. Examples of the alkoxysilane compound having a protected primary amino group used as a modifying agent include N,N-bis(trimethyl silyl)amino propyl methyl dimethoxy silane, 1-trimethyl silyl-2,2-dimethoxy-1-aza-2-silacyclopentane, N,N-bis(trimethyl silyl) aminopropyl trimethoxy silane, N,N-bis(trimethyl silyl) aminopropyl triethoxy silane, N,N-bis(trimethyl silyl)amino propyl methyl diethoxy silane, NN-bis(trimethyl silyl)aminoethyltrimethoxy silane, N,N-bis(trimethyl silyl)aminoethyltriethoxy silane, N,N-bis(trimethyl silyl)aminoethyl methyl dimethoxy silane and N,N-bis(trimethyl silyl)aminoethyl methyl diethoxy silane. N,N-bis(trimethyl silyl)amino propyl methyl dimethoxy silane, N,N-bis(trimethyl silyl)amino propyl methyl diethoxy silane or 1-trimethyl silyl-2,2-dimethoxy-1-aza-2-silacyclopentane is preferred.

Examples of the modifying agent also include alkoxysilane compounds having a protected secondary amino group such as N-methyl-N-trimethyl silyl aminopropyl(methyl)dimethoxy silane, N-methyl-N-trimethyl silyl aminopropyl(methyl)diethoxy silane, N-trimethyl silyl(hexamethyleneimine-2-yl)propyl(methyl)dimethoxy silane, N-trimethyl silyl(hexamethyleneimin-2-yl)propyl(methyl)diethoxy silane, N-trimethyl silyl(pyrrolidin-2-yl)propyl(methyl)dimethoxy silane, N-trimethyl silyl(pyrrolidin-2-yl)propyl(methyl)diethoxy silane, N-trimethyl silyl(piperidin-2-yl)propyl(methyl)dimethoxy silane, N-trimethyl silyl(piperidin-2-yl)propyl(methyl)diethoxy silane, N-trimethyl silyl(imidazol-2-yl)propyl(methyl)dimethoxy silane, N-trimethyl silyl(imidazol-2-yl)propyl(methyl)diethoxy silane, N-trimethyl silyl(4,5-dihydroimidazol-5-yl)propyl(methyl)dimethoxy silane and N-trimethyl silyl(4,5-dihydroimidazol-5-yl)propyl(methyl)diethoxy silane; alkoxysilane compounds having an imino group such as N-(1,3-dimethyl butylidene)-3-(triethoxy silyl)-1-propaneamine, N-(1-methyl ethylidene)-3-(triethoxy silyl)-1-propaneamine, N-ethylidene-3-(triethoxy silyl)-1-propaneamine, N-(1-methyl propylidene)-3-(triethoxy silyl)-1-propaneamine, N-(4-N,N-dimethyl aminobenzylidene)-3-(triethoxy silyl)-1-propaneamine and N-(cyclohexylidene)-3-(triethoxy silyl)-1-propaneamine; and alkoxysilane compounds having an amino group such as 3-dimethyl aminopropyl(triethoxy)silane, 3-dimethyl aminopropyl(trimethoxy)silane, 3-diethyl aminopropyl(triethoxy)silane, 3-diethyl aminopropyl(trimethoxy)silane, 2-dimethyl aminoethyl(triethoxy)silane, 2-dimethyl aminoethyl(trimethoxy)silane, 3-dimethyl aminopropyl(diethoxy) methyl silane and 3-dibutyl aminopropyl(triethoxy)silane.

These modifying agents may be used alone, or two or more of these may be used in combination. These modifying agents may be a partially condensed product. Herein, the partially condensed product means a modifying agent in which part of (not all of) SiOR is condensed to a SiOSi bond.

In the modification reaction by the above-mentioned modifying agent, the amount of the modifying agent used is preferably 0.5 to 200 mmol/kg conjugated diene based polymer, more preferably 1 to 100 mmol/kg conjugated diene based polymer, and particularly preferably 2 to 50 mmol/kg conjugated diene based polymer. Herein, the conjugated diene based polymer means the mass of polymer only which does not contain additives such as an antioxidant which is added during or after the manufacture. By making the amount of modifying agent used in the above range, a rubber composition in which the dispersion of a filler, in particular a carbon filler is good, as well as rupture resistant characteristics after vulcanization and low heat generating properties are improved can be obtained. The method of adding the modifying agent is not particularly limited, and examples thereof include a method of adding in a lump, a method of adding in division and a method of adding continuously. The method of adding in a lump is preferred. The modifying agent can be bonded to any of a main chain and side chain of a polymer other than the polymerization initiation end or the polymerization termination end, and from the viewpoint of inhibiting energy loss from the polymer end and improving the low heat generating properties, it is preferable that modifying agent be introduced at the polymerization initiation end or the polymerization termination end.

In the present invention, in order to accelerate a condensation reaction to which an alkoxysilane compound having a protected primary amino group used as a modifying agent relates, it is preferable that a condensation accelerator be used. As such a condensation accelerator, a compound containing a tertiary amino group or an organic compound containing at least one element belonging to any of groups 3, 4, 5, 12, 13, 14 and 15 in the periodic table (longer period) can be used. As the condensation accelerator, alkoxide, carboxylate or acetylacetonate complex salts containing at least one metal selected from the group consisting of titanium (Ti), zirconium (Zr), bismuth (Bi), aluminum (Al) and tin (Sn) is preferably used.

The condensation accelerator used herein may be added before modification reaction, and it is preferable that the condensation accelerator be added to a modification reaction system during and/or after the modification reaction. In the case of adding the condensation accelerator thereto before the modification reaction, a hydrocarbyloxy group having a primary group protected by an active end is sometimes not introduced due to occurrence of a direct reaction with the active end. The timing of adding the condensation accelerator is normally 5 minutes to 5 hours after the start of modification reaction, and preferably 15 minutes to 1 hour after the start of modification reaction.

Specific examples of the condensation accelerator include compounds containing titanium such as tetramethoxy titanium, tetra ethoxy titanium, tetra-*n-*propoxy titanium, tetraisopropoxy titanium, tetra-*n*-butoxy titanium, tetra-*n*-butoxy titanium oligomer, tetra-*sec*-butoxy titanium, tetra-*tert*-butoxy titanium, tetra(2-ethylhexyl)titanium, bis(octane dioleate)bis(2-ethylhexyl)titanium, tetra(octane dioleate)titanium, titanium lactate, titanium dipropoxybis(triethanol aminate), titanium dibutoxy bis(triethanol aminate), titanium tributoxystearate, titanium tripropoxystearate, titanium ethylhexyl dioleate, titanium tripropoxy acetylacetonate, titanium dipropoxybis(acetylacetonate), titanium tripropoxy ethyl acetoacetate, titanium propoxy acetylacetonatebis(ethylacetoacetate), titanium tributoxy acetylacetonate, titanium tributoxybis(acetylacetonate), titanium tributoxy ethyl acetate, titanium butoxy acetylacetonatebis(ethylacetoacetate), titanium tetrakis(acetylacetonate), titanium diacetylacetonatebis(ethylacetoacetate), bis(2-ethyl hexanoate)titanium oxide, bis(laurate)titanium oxide, bis(naphthenate)titanium oxide, bis(stearate)titanium oxide, bis(oleate)titanium oxide, bis(linoleate)titanium oxide, tetrakis(2-ethylhexyl)titanium, tetrakis(laurate)titanium, tetrakis(naphthenate)titanium, tetrakis(stearate)titanium, titanium(oleate)titanium and tetrakis(linoleate)titanium.

Examples of the condensation accelerator include tris(2-ethyl hexanoate)bismuth, tris(laurate)bismuth, tris(naphthenate)bismuth, tris(stearate)bismuth, tris(oleate)bismuth, tris(linoleate)bismuth, tetra ethoxy zirconium, tetra-*n*-propoxy zirconium, tetraisopropoxy zirconium, tetra-*n*-butoxy zirconium, tetra-sec-butoxy zirconium, tetra-*tert*-butoxy zirconium, tetra(2-ethylhexyl) zirconium, zirconium tributoxystearate, zirconium tributoxy acetylacetonate, zirconium dibutoxy bis(acetylacetonate), zirconium tributoxy ethyl acetoacetate, zirconium butoxy acetylacetonatebis(ethyl acetoacetate), zirconium tetrakis(acetylacetonate), zirconium diacetylacetonatebis(ethyl acetoacetate), bis(2-ethyl hexanoate) zirconium oxide, bis(laurate) zirconium oxide, bis(naphthenate) zirconium oxide, bis(stearate) zirconium oxide, bis(oleate) zirconium oxide, bis(linoleate) zirconium oxide, tetrakis(2-ethylhexyl) zirconium, tetrakis(laurate) zirconium, tetrakis(naphthenate) zirconium, tetrakis(stearate) zirconium, tetrakis(oleate) zirconium and tetrakis(linoleate) zirconium.

Examples thereof also include triethoxy aluminum, tri-*n*-propoxy aluminum, triisopropoxy aluminum, tri-*n*-butoxy aluminum, tri-*sec*-butoxy aluminum, tri-tert-butoxy aluminum, tri(2-ethylhexyl)aluminum, aluminum dibutoxy stearate, aluminum dibutoxy acetylacetonate, aluminum butoxybis(acetylacetonate), aluminum dibutoxy ethyl acetoacetate, aluminum tris(acetylacetonate), aluminum tris(ethyl acetoacetate), tris(2-ethyl hexanoate)aluminum, tris(laurate)aluminum, tris(naphthenate)aluminum, tris(stearate)aluminum, tris(oleate)aluminum and tris(linoleate)aluminum.

Among the condensation accelerators described above, the titanium compounds are preferred, and the alkoxides of titanium metal, the carboxylates of titanium metal or the acetylacetonate complex salts of titanium metal are particularly preferred. A use amount of the above condensation accelerators is preferably 0.1 to 10, particularly preferably 0.5 to 5 in terms of a mole ratio of a mole number of the compounds described above to a whole mole number of the hydrocarbyloxy groups present in the reaction system. The condensation reaction proceeds efficiently by controlling a use amount of the condensation accelerators to the ranges described above.

The condensation reaction in the present invention proceeds under the presence of the above-mentioned condensation accelerator and vapor or water. Examples of a case under the presence of vapor include a desolvate treatment by steam strapping, and the condensation reaction proceeds during steam stripping. The condensation reaction may be performed in an aqueous solution, and the condensation reaction temperature is preferably 85 to 180°C, more preferably 100 to 170°C and particularly preferably 110 to 150°C. By setting the temperature in the condensation reaction to the above mentioned ranges, the condensation reaction is allowed to proceed efficiently thereby being completed, and decrease in a quality or the like of the obtained modified conjugate diene based polymer by aging reaction of the polymer or the like due to a change thereof with the passage of time can be suppressed.

The condensation reaction time is usually 5 minutes to 10 hours, preferably 15 minutes to 5 hours. A pressure of the reaction system in the condensation reaction is usually 0.01 to 20 MPa, preferably 0.05 to 10 MPa. A method of performing the condensation reaction in an aqueous solution is not particularly be limited, and a batch type reactor may be used or an equipment such as a multistage continuous type reactor may be used to perform the reaction in a continuous manner. This condensation reaction and desolvent may be carried out at the same time.

A primary amino group originating in the modifying agent in the modified conjugate diene based polymer of the present invention is formed, as mentioned above, by performing deprotection treatment. A suitable specific example of deprotection treatment other than desolvent treatment using water vapor such as the steam stripping mentioned above will be described below. That is, at first, a protective group on a primary amino group is hydrolyzed to be converted into a free primary amino group. This is subjected to desolvent treatment, whereby a modified conjugate diene based polymer having a primary amino group can be obtained. A protected primary amino group originating in the modifying agent can be subjected, if necessary, to deprotection treatment in any stage from a stage including the above condensation treatment to a dried polymer obtained by desolvent.

The modified conjugate diene based polymer obtained in such a manner has a Mooney viscosity (ML₁₊₄, 100°C) of preferably 10 to 150, more preferably 15 to 100. When the Mooney viscosity is less than 10, the rubber physical properties including the rupture resistant characteristics are not sufficiently obtained, and when it exceeds 150, the operability is inferior to make it difficult to mix the polymer with the blend agents. The non-vulcanized rubber composition which is blended with the above-mentioned amine-modified conjugated diene based polymer has a Mooney viscosity (ML₁₊₄, 130°C) of preferably 10 to 150, more preferably 30 to 100.

In the above-mentioned amine-modified conjugated diene based polymer, the ratio (Mw/Mn) of weight-average molecular weight (Mw) to number-average molecular weight (Mn), that is, the molecular weight distribution (Mw/Mn) is preferably 1 to 3, and more preferably 1.1 to 2.7. By setting the molecular weight distribution (Mw/Mn) of the amine-modified conjugated diene based polymer within the above-mentioned range, it is made easy to knead the polymer without reducing the operability of the rubber composition even when the amine-modified conjugated diene based polymer is blended with the rubber composition, and it is made possible to sufficiently improve the physical properties of the rubber composition.

Further, the above-mentioned amine-modified conjugated diene based polymer has a number-average molecular weight (Mn) of preferably 100,000 to 500,000, and more preferably 150,000 to 300,000. By setting the number-average molecular weight of the amine-modified conjugated diene based polymer in the above-mentioned range, a reduction in an elastic modulus of the vulcanized matter and an elevation in the hysteresis loss are restrained to obtain an excellent rupture resistant characteristics, and a rubber composition containing the amine-modified conjugated diene based polymer with an excellent kneading operability is obtained. The above-mentioned amine-modified conjugated diene based polymer may be used alone or two or more of these may be used in combination.

In the rubber composition according to the present invention, the above-mentioned filler is used in a proportion of not higher than 50 parts by mass based on 100 parts by mass of the above-mentioned rubber component. When the amount of the filler exceeds 50 parts by mass, effects such as sufficiently low heat generating properties or a low elasticity are not exerted, and a dynamic storage modulus E' at a dynamic strain of 1 % at 25°C is sometimes higher than 10 MPa in the physical properties of the vulcanized rubber of the obtained rubber composition. When the amount of the filler is too large, the Σ value of loss tangent tan at 28°C to 150°C is sometimes higher than 5.0 in the physical properties of the vulcanized rubber of the obtained rubber composition. Accordingly, the amount of the filler is preferably 50 to 30 parts by mass, and more preferably 45 to 40 parts by mass. When the amount of the filler is not larger than 30 parts by mass, the braking strength of the rubber is decreased and the run-flat durability may be compromised.

As the above-mentioned filler, at least one selected from carbon black, silica and the inorganic filler represented by Formula (I):

nM·xSiO_{y}·zH₂O (I)

(wherein M is at least one selected from metal selected from aluminum, magnesium, titanium, calcium and zirconium, oxides or hydroxides of these metals, hydrates thereof and carbonates of these metals; and n, x, y and z are an integer of 1 to 5, an integer of 0 to 10, an integer of 2 to 5 and an integer of 0 to 10 respectively) is suitably used. Among these, as the filler, carbon black and silica are preferred, and carbon black is particularly preferred.

Here, as the carbon black, in order for the physical properties of the vulcanized rubber of the rubber composition to be obtained to satisfy the conditions according to the present invention, carbon blacks of a variety of grades such as FEF grade, FF grade, HAF grade, ISAF grade, GPF grade and SAF grade can be used alone or in an appropriate mixture thereof. In particular, in order to attain low heat generating properties, FEF grade is suitable. The silica is not particularly limited, and wet silica, dry silica and colloidal silica are preferred. These can be used alone or in an appropriate mixture thereof.

Specific examples of the inorganic fillers represented by the above-mentioned general formula (I) which can be used include alumina (Al₂O₃) such as γ-alumina and α-alumina, alumina monohydrate (Al₂O₃·H₂O) such as boehmite and diaspora, aluminum hydroxide (Al(OH)₃) such as gibbsite and bayerite, aluminum carbonate [Al₂(CO₃)₂], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide (Ca(OH)₂), magnesium aluminum oxide (MgO·AL₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O and the like), magnesium silicate (Mg₂SiO₄, HgSiO₃ and the like), calcium silicate (Ca₂·SiO₄ and the like), calcium aluminum silicate (Al₂O₃·CaO·2SiO₂ and the like), calcium magnesium silicate (CaMgSiO₄), calcium carbonate (CaCO₃), zirconium oxide (ZrO₂), zirconium hydroxide (ZrO(OH)₂·nH₂O), zirconium carbonate (Zr(CO₃)₂), crystalline aluminosilicates containing hydrogen, alkali metal or alkaline earth metal which corrects a charge, such as various zeolites. As the inorganic filler represented by the general formula (I), a filler in which M is at least one selected from aluminum metal, oxide or hydroxide of aluminum, hydrates thereof and carbonate of aluminum is preferred.

Various chemicals usually used in the rubber industry, for example, a vulcanizing agent, a vulcanization accelerator, a process oil, an antioxidant, a scorch inhibitor, zinc oxide and stearic acid can be added, if desired, to the rubber composition according to the present invention as long as the effects of the present invention are not compromised.

Examples of the vulcanizing agent include sulfur, and the amount thereof used is preferably 0.1 to 10.0 parts by mass, more preferably 1.0 to 5.0 parts by mass in terms of a sulfur content based on 100 parts by mass of the rubber component. When the amount of the vulcanizing agent used is less than 0.1 parts by mass, the rupture strength, the abrasion resistance and the low heat generating properties of the vulcanized rubber is likely to be decreased, and on the other hand, when the amount exceeds 10.0 parts by mass, it causes loss of the rubber elasticity.

The vulcanization accelerating agent is not particularly limited, and examples thereof include thiazole based vulcanization accelerators such as M (2-mercaptobenzothiazole), DM (dibenzothiazyl disulfide), CZ (N-cyclohexyl-2-benzothiazylsulfeneamide), guanidine based vulcanization accelerators such as DGP (diphenylguanidine) and thiuram based vulcanization accelerators such as TOT (tetrakis(2-ethylhexyl)thiuram disulfide). The amount thereof used is preferably 0.1 to 5.0 parts by mass, more preferably 0.2 to 3.0 parts by mass based on 100 parts by mass of the rubber component.

Examples of the process oil used as a softening agent include paraffin based compounds, naphthene based compounds and aromatic based compounds. The aromatic based compounds are used for applications in which great importance is placed on the tensile strength and the abrasion resistance, and the naphthene based or paraffin based compounds are used for applications in which great importance is placed on the hysteresis loss and the low temperature characteristic. The amount thereof used is preferably 0 to 100 parts by mass based on 100 parts by mass of the rubber component, and when it is 100 parts by mass or less, the deterioration of the tensile strength and the low heat generating properties (low fuel consumption) can be inhibited.

Examples of the antioxidant include 3C (N-isopropyl-N'-phenyl-p-phenylenediamine), 6C (N-(1,3-dimethylbutyl)-N'-phenyl-p-phenylenediamine), AW (6-ethoxy-2,2,4-trimethyl-1,2-dihydroxyquinoline), high temperature condensation products of diphenylamine and acetone. The amount thereof used is preferably 0.1 to 5.0 parts by mass, more preferably 0.3 to 3.0 parts by mass based on 100 parts by mass of the rubber component.

The rubber composition according to the present invention is required to have a dynamic storage modulus E' of not more than 10 MPa at a dynamic strain of 1% at 25°C in the physical properties of the vulcanized rubber. When the dynamic storage modulus E' exceeds 10 MPa, the tire during normal travelling is less liable to be deflected, and the riding comfort is reduced. The above-mentioned dynamic storage modulus E' is suitably not less than 8 MPa, and the upper limit thereof is not particularly limited. The above-mentioned dynamic storage modulus E' is a value measured by the following method.

### <Method for measuring dynamic storage modulus E'>

A sheet having a width of 5 mm and a length 40 mm is cut out from a slab sheet having a thickness of 2 mm which is obtained by vulcanizing a side inner layer rubber composition on the conditions of 160°C and 12 minutes, and it is used as a sample. A dynamic storage modulus E' of the above sample is measured on the conditions of a chuck-to-chuck distance of 10 mm, an initial strain of 200 µm, a dynamic strain of 1%, a frequency of 52 Hz and a measuring temperature of 25°C by means of a spectrometer manufactured by Ueshima Seisakusho Co., Ltd.

The rubber composition according to the present invention needs to have a Σ value (Σtanδ (28 to 150°C)) of loss tangent tanδ at 28°C to 150°C in the physical properties of the vulcanized rubber of not more than 5.0. When the E value of tanδ exceeds 5.0, the tire generates a large amount of heat during run-flat travelling, and the run-flat travel durability of the tire is reduced. The lower limit of the value of Σtanδ (28 to 150°C) is not particularly limited, and usually about 3. The above-mentioned Σtanδ (28 to 150°C) is a value measured by the following method.

### <Method for measuring Σtanδ (28 to 150°C)>

A sheet having a width of 5 mm and a length 40 mm is cut out from a slab sheet having a thickness of 2 mm which is obtained by subjecting a rubber composition to vulcanization treatment on the conditions of 160°C for and 12 minutes, and it is used as a sample. A loss tangent tan δ of this sample is measured on the conditions of a chuck-to-chuck distance of 10 mm, an initial strain of 200 µm, a dynamic strain of 1%, a frequency of 52 Hz and a measurement initiating temperature of 25 to 200°C by using a spectrometer manufactured by Ueshima Seisakusho Co., Ltd. As shown in Fig. 2, the relation between the temperature and tan δ is shown by a graph to determine an area of a shaded part, and a value thereof is set to Σtanδ (28 to 150°C) .

The rubber composition according to the present invention is obtained by kneading the components according to the blend formulation described above by using a kneading equipment such as a Banbury mixer, a roll or an internal mixer, and after subjected to mold processing, it is vulcanized and used for the side reinforcing rubber layer 5 and/or the bead filler 7.

In the run-flat tire of the present invention, only that the conditions for the above-mentioned carcass ply cord are satisfied is important, and other conditions such as the tire structure in detail and the material of each of the members are not particularly limited. The tire can be constituted by suitably selecting the conventionally known conditions.

For example, in the tire of the present invention, a tread pattern is appropriately formed on the surface of the tread portion 3, and an inner liner is formed on the innermost layer (not shown). In the tire of the present invention, as the gas for filling the tire with, a normal air or an air having an altered oxygen partial pressure, or an inactive gas such as nitrogen can be used.

### Examples

The present invention will now be described in detail by way of Examples.

### <Comparative Examples 1 and 2, Examples 1 to 3>

A run-flat tire of a side reinforcing type having the structure shown in Fig. 1 was manufactured in a tire size of245/40R18 by applying the conditions shown in the table below to a carcass ply cord. The values of the thermal shrinkage stress and the tensile stiffness of the carcass ply cords shown in the table below were adjusted by controlling the tension in the dip treatment. As an adhesive for a hybrid cord using cellulose fiber and nylon, an RFL adhesive was used. One sheet of carcass ply was used, and on the crown portion thereof in the tire radial direction, a belt composed of two sheets of belt layers was disposed with an angle of ±26° with respect to the tire equatorial plane. For each of the obtained test tires, the vertical stiffness and the run-flat drum durability during normal travelling were evaluated according to the following. The results thereof are shown in the table below in combination.

### <Vertical stiffness during normal travelling>

Each test tire was filled with an internal pressure of 230 kPa, and a load-deflection curve was created. The inclination of the tangent line on the obtained load-deflection curve at a certain load was set as a vertical spring constant corresponding to the load. The value of the vertical spring constant of the tire of Comparative Example 1 was set 100 shown as an index. The larger the index value is, the larger the vertical spring constant is. Therefore, the smaller the index value is, the better the riding comfort is.

### <Run-flat drum durability>

Without being filled with an internal pressure, each test tire was subjected to a drum test on the conditions of a load of 4.17 kN, a speed of 89 km/h and a temperature of 38°C. The travel distances of the individual test tires travelling until troubles were caused were measured and shown by an index, wherein a travel distance of a tire in Comparative Example 1 was set to 100. The larger the index is, the longer the travel distance until troubles were caused, which means better run-flat durability.

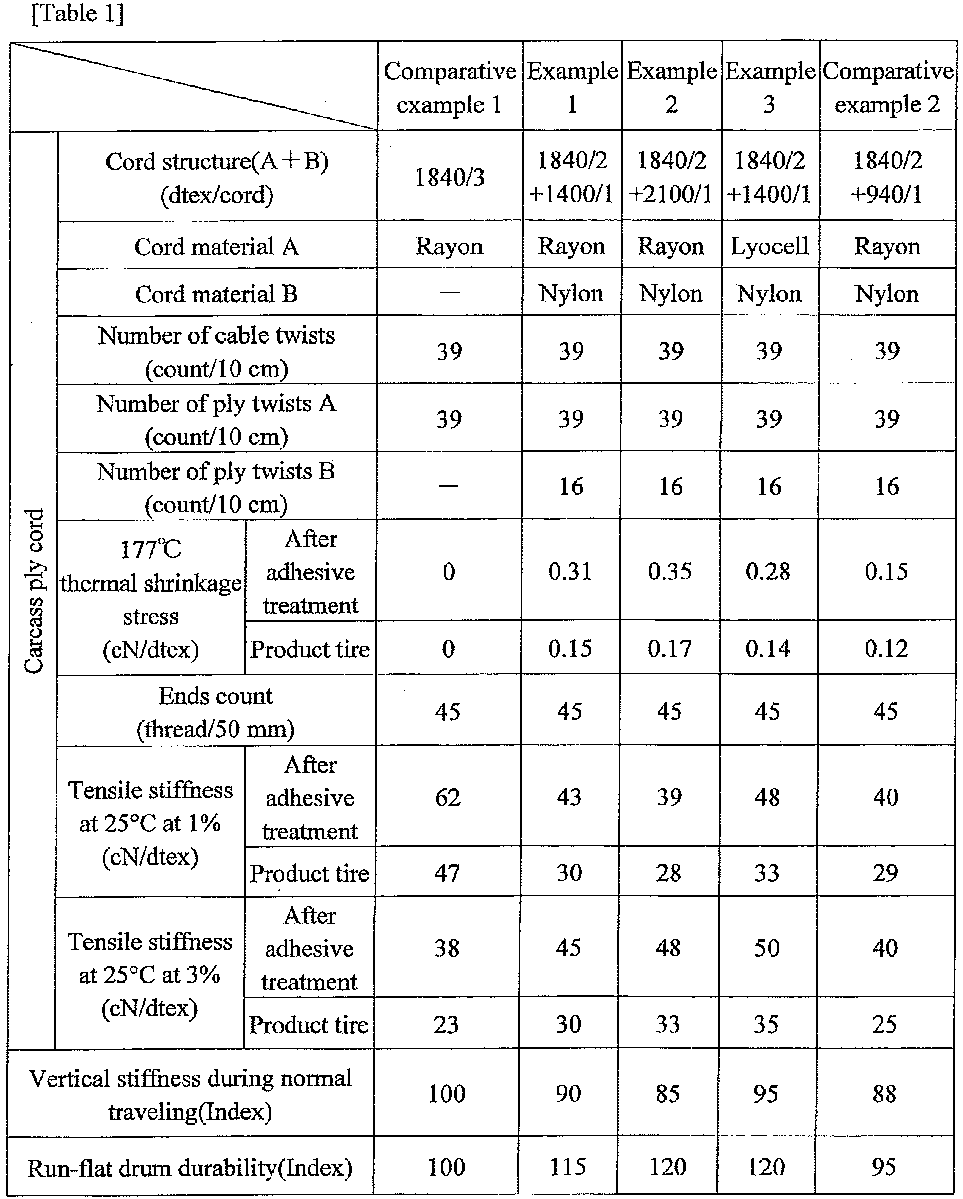

### <Comparative Examples 3 and 4, Examples 4 to 6>

A run-flat tire of a side reinforcing type having the structure shown in Fig. 1 was manufactured in a tire size of245/45R19 by applying the conditions shown in the table below to a carcass ply cord. The values of the thermal shrinkage stress and the tensile stiffness of the carcass ply cords shown in the table below were adjusted by controlling the tension and the temperature in the dip treatment. As an adhesive for a hybrid cord using cellulose fiber and nylon, an RFL adhesive was used. Two sheets of carcass plies were used, and on the crown portion thereof in the tire radial direction, a belt composed of two sheets of belt layers was disposed with an angle of ±26° with respect to the tire equatorial plane. For each of the obtained test tires, the vertical stiffness and the run-flat durability during normal travelling were evaluated in the same manner as in Comparative example 1. The results thereof are shown in the table below shown in combination by index setting the value in Comparative example 3 as 100.

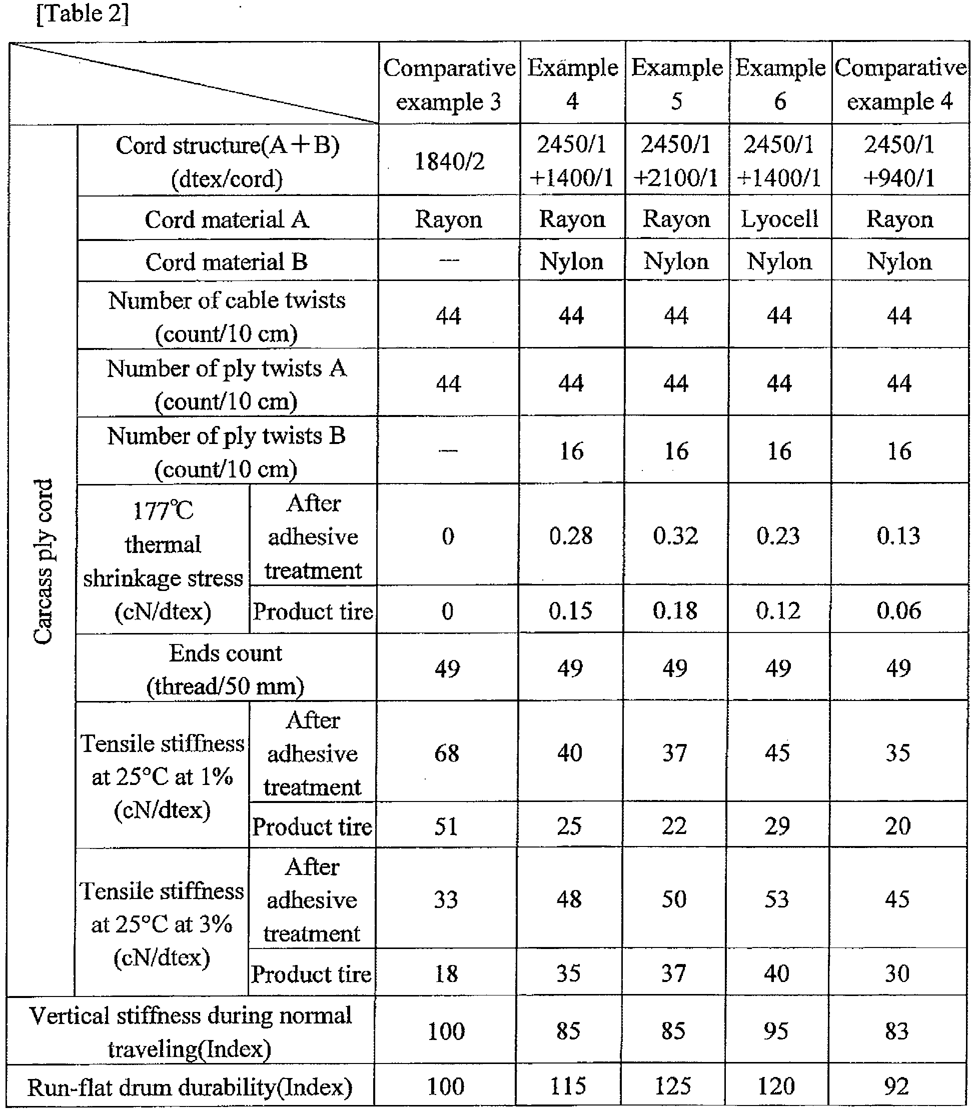

As is seen from the Tables above, in the tires of the Examples in which a hybrid cord which satisfies the conditions according to the present invention was applied to a carcass cord, it is obvious that an improvement in the run-flat durability of the tire is attained while improving the riding comfort during normal travelling compared to a tire in the Comparative example in which a conventional carcass ply cord was used.

### <Manufacture example 1: Primary amine-modified polybutadiene>

### (1) Manufacture of polybutadiene

A 5 L autoclave substituted with nitrogen was charged with 1.4 kg of cyclohexane, 250 g of 1,3-butadiene and 2,2-ditetrahydrofurylpropane (0.0285 mmol) in the form of a cyclohexane solution under nitrogen flow, and after 2.85 mmol of n-butyllithium (BuLi) was added thereto, polymerization was carried out for 4.5 hours in a warm water bath of 50°C equipped with a stirring device. A reaction conversion rate of 1,3-butadiene was almost 100%. The above polymer solution was put in a methanol solution containing 1.3 g of 2,6-di-*tert*-butyl-p-cresol to terminate the polymerization, and then the solvent was removed by steam stripping. The resultant was dried on a roll of 110°C to obtain polybutadiene. For the thus obtained polybutadiene, a micro structure (vinyl bonding amount), a weight-average molecular weight (Mw) and a molecular weight distribution (Mw/Mn) were measured. The results thereof showed a vinyl bonding amount of 14%, Mw of 150,000 and Mw/Mn of 1.1.

### (2) Manufacture of primary amine-modified polybutadiene

The polymer solution obtained in (1) described above was maintained at a temperature of 50°C without deactivating the polymerization catalyst, and 1129 mg (3.364 mmol) of N,N-bis(trimethylsilyl)aminopropylmethyldiethoxysilane in which a primary amino group was protected was added thereto to carry out modification reaction for 15 minutes. Lastly, 2,6-di-*tert*-butyl-p-cresol was added to the polymer solution after the reaction. Then, desolvent and deprotection of the protected primary amino group were carried out by steam stripping, and the rubber was dried by a hot roll which was controlled at a temperature of 110°C to obtain primary amine-modified polybutadiene. For the thus obtained primary amine-modified polybutadiene, a micro structure (vinyl bonding amount), a weight average molecular weight (Mw), a molecular weight distribution (Mw/Mn) and a primary amino group content were measured. The results thereof showed a vinyl bonding amount of 14%, Mw of 150,000, Mw/Mn of 1.2 and a primary amino group content of 4.0 mmol/kg.

### <Manufacture example 2: Manufacture of secondary amine-modified polybutadiene>

N-methyl-N-(trimethylsilyl)aminopropylmethyldiethoxysilane which is secondary amine was used as a modifying agent, and a modification reaction was performed based on the (2) described above to obtain secondary amine-modified polybutadiene.

### <Manufacture example 3: Manufacture of tertiary amine-modified polybutadiene>

DMAPES: 3-dimethylaminopropyl(diethoxy)methylsilane was used as a modifying agent, and a modification reaction was performed based on the (2) described above to obtain tertiary amine-modified polybutadiene.

### <Manufacture example 4: Manufacture of tin modified polybutadiene>

A pressure proof vessel of 800 ml which was dried and substituted with nitrogen was charged with a cyclohexane solution (16%) of butadiene so that the butadiene monomer was 50 g, and 0.44 mmol of ditetrahydrofurylpropane was added thereto. Further, 0.48 mmol of *n*-butyllithium (BuLi) was added thereto, and then polymerization was carried out at 50°C for 1.5 hour. The polymerization conversion rate was almost 100%. Tin tetrachloride 0.43 mmol was added to the above polymerization system, and then modification reaction was further carried out at 50°C for 30 minutes. Thereafter, 0.5 ml of an isopropanol 5 weight % solution of 2,6-di-*t-*butyl-*p*-cresol (BHT) was added to the polymerization system to terminate the reaction, and the resultant was further dried by a conventional method to thereby obtain tin tetrachloride-modified polybutadiene. Wn thereof after the modification was 570,000.

The above-mentioned characteristics were measured according to the following methods.

### <Analytical method of micro structure>

The content (%) of the vinyl bond was measured by an infrared method (Morello method).

### <Measurement of number-average molecular weight (Mn), weight-average molecular weight (Mw) and molecular weight distribution (Mw/Mn)>

Measurements were carried out by GPC (HLC-8020, manufactured by Tosoh Corp.) using a refractometer as a detector and the results were shown in terms of polystyrene using monodispersed polystyrene as a standard. The column is GMHXL (manufactured by Tosoh Corp.), and the eluent is tetrahydrofuran.

### <Measurement of primary amino group content (mmol/kg)>

First, the polymer was dissolved in toluene, and then it was precipitated in a large amount of methanol to separate an amino group-containing compound which was not bonded to the polymer from the rubber, followed by drying it. The polymer subjected to the above treatment was used as a sample to quantitatively determine a whole amino group content thereof by "a whole amine value test method" described in JIS K7237. Subsequently, the polymer subjected to the treatment described above was used as a sample to quantitatively determine the contents of a secondary amino group and a tertiary amino group by "an acetylacetone blocked method". *o*-Nitrotoluene was used for the solvent dissolving the sample, and acetylacetone was added thereto to carry out potentiometric titration by a perchloric acid solution. The contents of a secondary amino group and a tertiary amino group were deducted from the whole amino group content to determine a primary amino group content (mmol), and it was divided by a mass of the polymer used for the analysis to thereby determine a content (mmol/kg) of a primary amino group bonded to the polymer.

### <Comparative Examples 5 to 8, Examples 7 to 13>

Rubber composition having the composition shown in the Table 3 below was prepared, and as the physical properties of vulcanized rubber, the dynamic storage modulus E' and the E value (Σ tanδ (28 to 150°C)) of loss tangent tanδ at 28 to 150°C were measured according to the methods described above.

**[Table 3]**

| rubber composition No. | | (1) | (2) |
|---|---|---|---|
| Composition detail (parts by mass) | Natural rubber*¹ | 30 | 30 |
| | Unmodified BR*² | 70 | - |
| | Primary amine-modified BR*³ | - | 70 |
| | Secondary amine-modified BR*⁴ | - | - |
| | Tertiary amine-modified BR*⁵ | - | - |
| | Tin modified BR*⁶ | - | - |
| | Carbon black*⁷ | 45 | 45 |
| | Process oil*⁸ | 3 | 3 |
| | Zinc oxide | 5 | 5 |
| | Steraric acid | 1 | 1 |
| | Antioxidant 6C*⁹ | 1 | 1 |
| | Vulcanizing accelerator CZ*¹⁰ | 3 | 3 |
| | Vulcanizing accelerator TOT*¹¹ | 1 | 1 |
| | Sulfur | 5 | 5 |
| Reinforcing rubber gauge*¹² | | 6.3 | 6.3 |
| Tensile stiffness E'(MPa)(Strain 1.0%, 25°C) | | 9.5 | 8 |
| Σ tan δ (28-150°C) | | 6.51 | 4.03 |

| | | | |
|---|---|---|---|
| 1) Natural rubber: TSR20 2) Unmodified polybutadiene: obtained in Manufacture example 1, (1) Manufacture of polybutadiene 3) Primary amine-modified polybutadiene: obtained in Manufacture example 1 4) Secondary amine-modified polybutadiene: obtained in Manufacture example 2 5) Tertiary amine-modified polybutadiene: obtained in Manufacture example 3 6) Tin-modified polybutadiene: obtained in Manufacture example 4 7) Carbon black: FEF (N550), "Asahi #60" manufactured by Asahi Carbon Co., Ltd. 8) Process oil: aromatic oil, "Aromax #3" manufactured by Fuji Kosan Company., Ltd. 9) Antioxidant 6C: N-(1,3-dimethylbutyl)-N'-phenyl-p-phenylenediamine, "Nocrac 6C" manufactured by Ouchi Shinko Chemical Industrial Co., Ltd. 10) Vulcanization Accelerator CZ: N-cyclohexyl-2-benzothiazylsulfeneamide, "Nocceler CZ" manufactured by Ouchi Shinko Chemical Industrial Co., Ltd. 11) Vulcanization Accelerator TOT: tetrakis (2-ethylhexyl)-thiuram disulfide, "Nocceler TOT-N" manufactured by Ouchi Shinko Chemical Industrial Co., Ltd. 12) Maximum thickness of side reinforcing rubber layer | | | |

A run-flat tire of a side reinforcing type having the structure shown in Fig. 1 was manufactured in a tire size of 225/45R17 by applying the conditions shown in the table below to a carcass ply cord. The values of the thermal shrinkage stress and the tensile stiffness of the carcass ply cords shown in the table below were adjusted by controlling the tension and the temperature in the dip treatment. As an adhesive for a hybrid cord using cellulose fiber and nylon, an RFL adhesive was used. One sheet of carcass ply were used, and on the crown portion thereof in the tire radial direction, a belt composed of two sheets of belt layers was disposed with an angle of ±26° with respect to the tire equatorial plane. The rubber compositions shown in the Table below are applied to a side reinforcing rubber layer individually. For each of the obtained test tires, the vertical stiffness, run-flat drum durability and the high-load drum durability during normal travelling were evaluated according to the above and the following. Each of the results was shown by an index setting the value in Comparative example 5 as 100. The results thereof are shown in the table below shown in combination.

### <High-load drum durability>

Each of the test tires was subjected to a drum test on the conditions of an internal pressure of 300 kPa, a load of 11.7 kN, a speed of 60 km/h and a temperature of 38°C. The travel distances of the test tires travelling until troubles were caused were measured. The results were shown by an index setting the travel distance of the tire in Comparative example 5 to 100. The larger the index is, the better the high-load durability is.

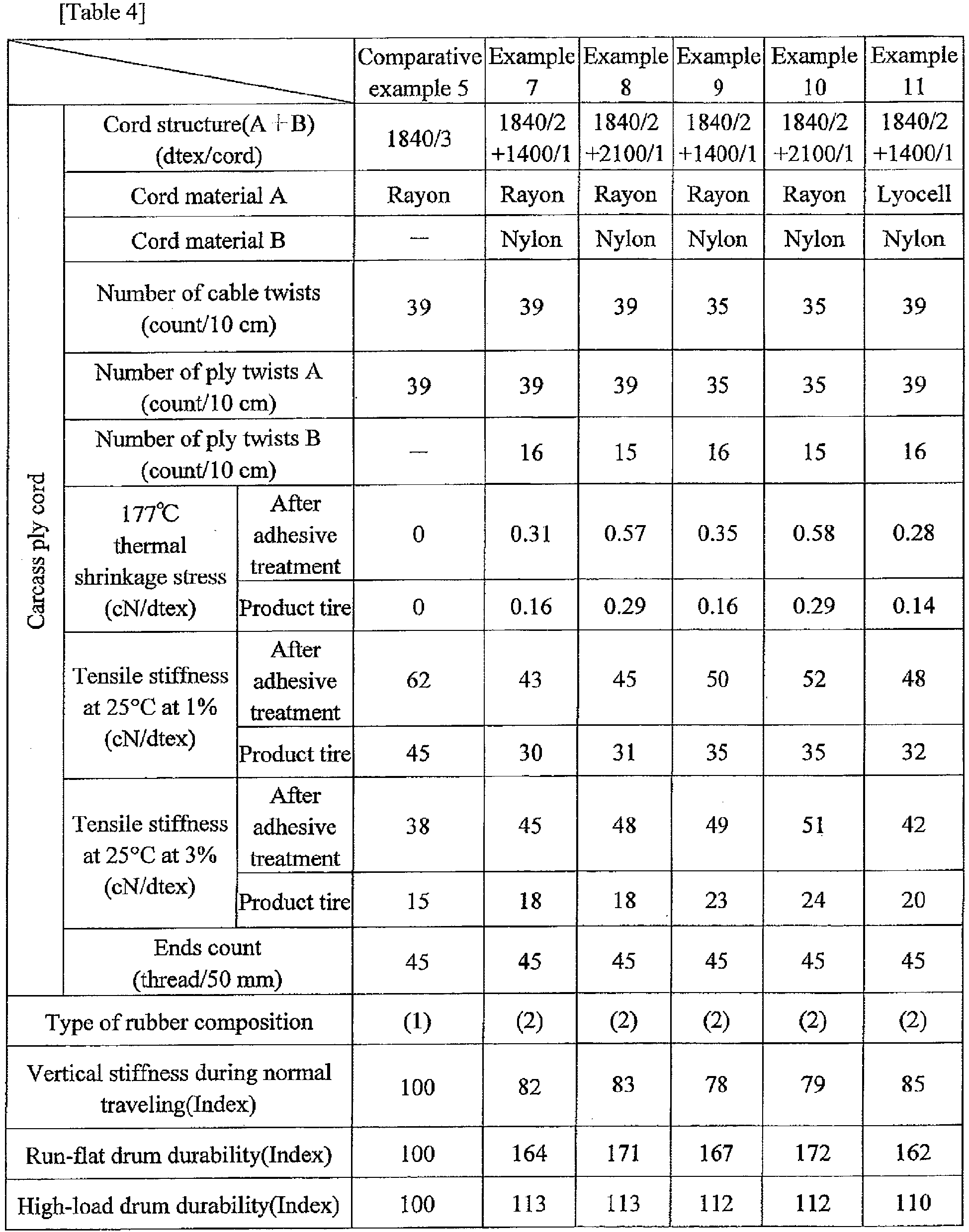

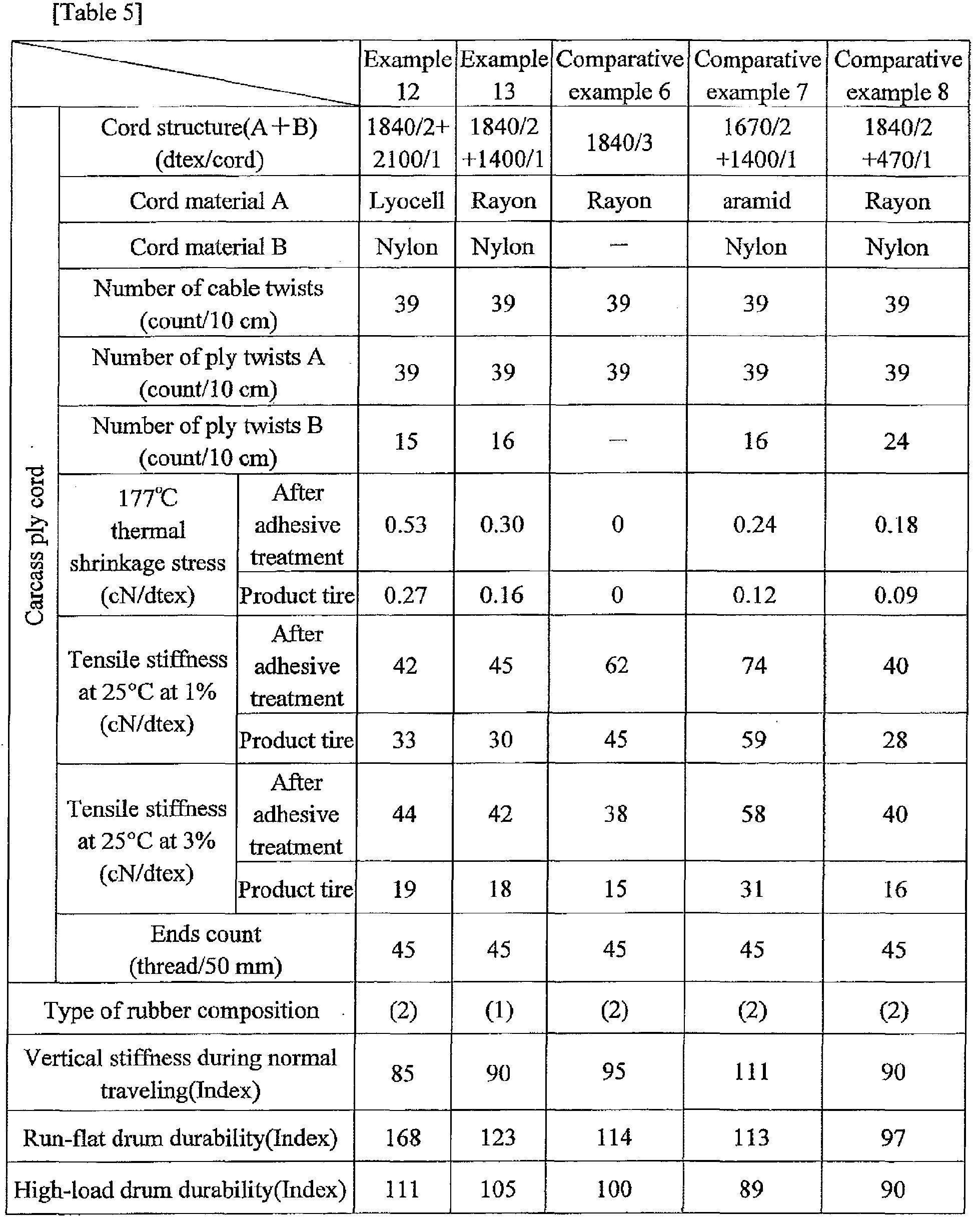

As seen from the results in the above Table, all of the riding comfort, the run-flat durability and the high-load drum durability were drastically improved in Example 7 or the like in which a rubber composition according to the present invention is used for a side reinforcing rubber layer, compared with those in Example 13 in which a rubber composition according to the present invention is not used. Since, in Comparative example 7 in which an aramid/nylon hybrid was used, the 1% tensile stiffness was hard to be controlled low even when the hybrid was used, the riding comfort was deteriorated, and the drum durability under high-load conditions was deteriorated due to a poor fatigue resistance of the aramid. When Comparative examples 5 and 6 in which a hybrid cord is not used are compared with each other, Comparative example 6 in which a rubber composition according to the present invention is used for a side reinforcing rubber layer is found to be favorable from the viewpoint of the riding comfort and the run-flat drum durability.

On the other hand, in the case of Comparative example 8, since the thermal shrinkage stress is insufficient, deflection of the tire during run-flat travelling cannot be sufficiently inhibited, and the durability is deteriorated. Since the thickness of the cord of nylon is not enough compared to the thickness of the cord of rayon, the balance between the thicknesses of these cords are lost, and the fatigue resistance of the rayon cord while the tire is travelling is considerably deteriorated, and as a result, the drum durability under high-load conditions is also deteriorated.

### Description of Symbols

- 1: bead portion
- 2: side wall portion
- 3: tread portion
- 4: carcass
- 5: side reinforcing rubber layer
- 6: bead core
- 7: bead filler
- 8: belt
- 9A, 9B: belt reinforcing layer

## Claims

1. A run-flat tire comprising a left-right pair of bead portion (1), a pair of side wall portions (2) continued from the bead portions individually to the outside in the tire radial direction, a tread portion (3) extending between the pair of side wall portions to form a ground contacting portion, a carcass (4) composed of one or more carcass plies extending toroidally between the pair of bead portions to reinforce these portions (1, 2, 3), and a side reinforcing rubber layer (5) having a crescent cross-sectional shape arranged on the inside of the carcass at the side wall portion, **characterised in that**
the carcass ply cord is a hybrid cord formed by twisting a filament composed of cellulose fibers and a filament composed of nylon, the thermal shrinkage stress (cN/dtex) of the hybrid cord at 177°C after an adhesive treatment is not less than 0.20 cN/dtex, and the thermal shrinkage stress (cN/dtex) of the hybrid cord at 177°C drawn from a tire product is not less than 0.10 cN/dtex.

2. The run-flat tire according to claim 1, wherein the tensile stiffness of the hybrid cord at 25°C at 1 % strain after an adhesive treatment is not higher than 60 cN/dtex, and the tensile stiffness of the hybrid cord at 25°C at 3% strain after an adhesive treatment is not lower than 30 cN/dtex, and the tensile stiffness of the hybrid cord at 25°C at 1% strain drawn from a tire product is not higher than 45 cN/dtex, and the tensile stiffness of the hybrid cord at 25°C at 3% strain drawn from a tire product is not lower than 12 cN/dtex.

3. The run-flat tire according to claim 1, wherein the ratio of the dtex value of nylon to the total dtex value of the hybrid cord is in the range from 17% to 60%.

4. The run-flat tire according to claim 1, wherein the hybrid cord is formed by being treated by one type of adhesive.

5. The run-flat tire according to claim 1, wherein the number of ply twists of two types of organic fibers constituting the hybrid cord is 30 to 60 /10 cm, and the number of cable twists of the hybrid cords is 25 to 60 /10 cm.

6. The run-flat tire according to claim 1, wherein either one of or both of the side reinforcing rubber layer and a bead filler (7), which are composed of a rubber composition, contains not more than 50 parts by mass of a filler with respect to 100 parts by mass of a rubber ingredient; the dynamic storage modulus E' at dynamic strain 1% at 25°C is not higher than 10 MPa; and the Σ value of the loss tangent tan δ at 28 to 150°C is not higher than 5.0, as a physical property of a vulcanized rubber.

## Patentansprüche

1. Notlaufreifen, der aufweist: ein linkes-rechtes Paar des Wulstabschnittes (1); ein Paar Seitenwandabschnitte (2), die sich von den Wulstabschnitten einzeln zur Außenseite in der radialen Reifenrichtung fortsetzen; einen Laufflächenabschnitt (3), der sich zwischen dem Paar der Seitenwandabschnitte erstreckt, um einen Reifenaufstandsabschnitt zu bilden; eine Karkasse (4), die aus einer oder mehreren Karkassenlagen besteht, die sich ringförmig zwischen dem Paar der Wulstabschnitte erstrecken, um diese Abschnitte (1, 2, 3) zu verstärken; und eine Seitenverstärkungsgummilage (5) mit einer sichelförmigen Querschnittsform, angeordnet auf der Innenseite der Karkasse im Seitenwandabschnitt, **dadurch gekennzeichnet, dass**
der Karkassenlagenkord ein Hybridkord ist, der durch Verzwirnen eines Filamentes, das aus Cellulosefasern besteht, und eines Filamentes gebildet wird, das aus Nylon besteht, wobei die Wärmeschrumpfspannung (cN/dtex) des Hybridkordes bei 177°C nach einer Klebstoffbehandlung nicht kleiner ist als 0,20 cN/dtex, und wobei die Wärmeschrumpfspannung (cN/dtex) des Hybridkordes bei 177°C, der aus einem Reifenprodukt gezogen wird, nicht kleiner ist als 0,10 cN/dtex.

2. Notlaufreifen nach Anspruch 1, bei dem die Zugsteifigkeit des Hybridkordes bei 25°C bei 1 % Dehnung nach einer Klebstoffbehandlung nicht höher ist als 60 cN/dtex, und wobei die Zugsteifigkeit des Hybridkordes bei 25°C bei 3 % Dehnung nach einer Klebstoffbehandlung nicht niedriger ist als 30 cN/dtex, und wobei die Zugsteifigkeit des Hybridkordes bei 25°C bei 1 % Dehnung, der aus einem Reifenprodukt gezogen wird, nicht höher ist als 45 cN/dtex, und wobei die Zugsteifigkeit des Hybridkordes bei 25°C bei 3 % Dehnung, der aus einem Reifenprodukt gezogen wird, nicht niedriger ist als 12 cN/dtex.

3. Notlaufreifen nach Anspruch 1, bei dem das Verhältnis des dtex-Wertes von Nylon zum gesamten dtex-Wert des Hybridkordes im Bereich von 17 % bis 60 % liegt.

4. Notlaufreifen nach Anspruch 1, bei dem der Hybridkord hergestellt wird, indem er mittels einer Art von Klebstoff behandelt wird.

5. Notlaufreifen nach Anspruch 1, bei dem die Anzahl der Zwirndrehungen der zwei Arten von organischen Fasern, die den Hybridkord bilden, 30 bis 60/10 cm beträgt, und wobei die Anzahl der Mehrfachzwirnungen der Hybridkorde 25 bis 60/10 cm beträgt.

6. Notlaufreifen nach Anspruch 1, bei dem entweder einer der beiden oder beide von Seitenverstärkungsgummilage und Kernreiter (7), die aus einer Gummizusammensetzung bestehen, nicht mehr als 50 Massen-T. eines Füllstoffes mit Bezugnahme auf 100 Massen-T. eines Gummibestandteils enthält; der dynamische Speichermodul E' bei einer dynamischen Dehnung von 1 % bei 25°C nicht höher ist als 10 MPa; und der Σ-Wert der Verlusttangente tan δ bei 25 bis 150°C als eine physikalische Eigenschaft eines vulkanisierten Gummis nicht höher ist als 5,0.

## Revendications

1. Bandage pneumatique à roulement à plat, comportant une paire de parties de talon de gauche et de droite (1), une paire de parties de flanc (2), s'étendant en continu et individuellement des parties de talon vers l'extérieur dans la direction radiale du bandage pneumatique, une partie de bande de roulement (3), s'étendant entre la paire de parties de flanc pour former une partie de contact au sol, une carcasse (4), composée d'une ou de plusieurs nappes de carcasse s'étendant toroïdalement entre la paire de parties de talon pour renforcer ces parties (1, 2, 3), et une couche de gomme de renforcement latérale (5), ayant une forme de section transversale en croissant agencée sur l'intérieur de la carcasse, au niveau de la partie de flanc, **caractérisé en ce que**
le câblé de la nappe de carcasse est un câblé hybride formé par torsion d'un filament composé de fibres de cellulose et d'un filament composé de nylon, la contrainte de retrait thermique (cN/dtex) du câblé hybride à 177°C, après un traitement par adhésif, n'étant pas inférieure à 0,20 cN/dtex, et la contrainte de retrait thermique (cN/dtex) du câblé hybride à 177°C, retiré d'un bandage pneumatique fini, n'étant pas inférieure à 0,10 cN/dtex.

2. Bandage pneumatique à roulement à plat selon la revendication 1, dans lequel la rigidité à la traction du câblé hybride à 25°C , en présence d'une contrainte de 1%, après un traitement par adhésif, n'est pas supérieure à 60 cN/dtex, la rigidité à la traction du câblé hybride à 25°C, en présence d'une contrainte de 3%, après un traitement par adhésif n'étant pas inférieure à 30 cN/dtex, et la rigidité à la traction du câblé hybride à 25°C, en présence d'une contrainte de 1%, retiré d'un bandage pneumatique fini, n'étant pas supérieure à 45 cN/dtex, et la rigidité à la traction du câblé hybride à 25°C, en présence d'une contrainte de 3%, retiré d'un bandage pneumatique fini, n'étant pas inférieure à 12 cN/dtex.

3. Bandage pneumatique à roulement à plat selon la revendication 1, dans lequel le rapport entre la valeur dtex du nylon et la valeur dtex totale du câblé hybride est compris dans l'intervalle allant de 17% à 60%.

4. Bandage pneumatique à roulement à plat selon la revendication 1, dans lequel le câblé hybride est formé par un traitement par un type d'adhésif.

5. Bandage pneumatique à roulement à plat selon la revendication 1, dans lequel le nombre de torsions de deux types de fibres organiques constituant le câblé hybride est compris entre 30 et 60/10 cm, le nombre de torsions du câblé des câblés hybrides étant compris entre 25 à 60/10 cm.

6. Bandage pneumatique à roulement à plat selon la revendication 1, dans lequel un élément, la couche de gomme de renforcement latérale ou un bourrage sur tringle (7), ou ces deux éléments, composés d'une composition de caoutchouc, ne contient pas plus de 50 parties en poids d'un bourrage sur tringle par rapport à 100 parties en poids d'un ingrédient de caoutchouc ; le module de conservation dynamique E', en présence d'une contrainte dynamique de 1% et d'une température de 25°C, n'étant pas supérieur à 10 MPa ; et la valeur Σ de la tangente de l'angle des pertes tan δ en présence d'une température comprise entre 28 et 150°C n'étant pas supérieure à 5,0, en tant que propriété physique d'un caoutchouc vulcanisé.
